# EUROPEAN PATENT SPECIFICATION

(11) **EP 3 376 015 B1**
(45) Date of publication and mention of the grant of the patent: **21.07.2021**
(21) Application number: 18152879.5
(22) Date of filing: 23.01.2018
(51) Int. Cl.: F02M 35/024, F02M 35/10, F02M 35/14, F02M 35/16, F01N 3/30, F01N 3/34

(54) **AIR CLEANER FOR INTERNAL COMBUSTION ENGINE**
LUFTFILTER FÜR EINEN VERBRENNUNGSMOTOR
FILTRE À AIR POUR MOTEUR À COMBUSTION INTERNE

(30) Priority: 13.03.2017 JP 2017047291
(43) Date of publication of application: 19.09.2018
(73) Proprietor: HONDA MOTOR CO., LTD., Tokyo 107-8556 (JP)
(72) Inventor: Shimizu, Takahiko, Saitama, 351-0193 (JP); Komura, Hiroyuki, Saitama, 351-0193 (JP); Kiyota, Shintaro, Saitama, 351-0193 (JP)
(74) Representative: Kiwit, Benedikt

(56) References cited:
- JP-A- S60 175 724
- JP-A- 2001 090 623
- JP-A- 2007 146 773
- US-A1- 2013 255 237

## Description

### [TECHNICAL FIELD]

The present invention relates to an air cleaner for an internal combustion engine comprising a secondary air conduit that has a downstream end portion and an upstream end portion, a secondary air valve being interposed at an intermediate portion of the secondary air conduit, the downstream end portion being coupled to an exhaust system, the upstream end portion being coupled to a cleaner case so as to be communicated with an inside of a purified chamber.

### [BACKGROUND ART]

A secondary air valve disposed in an intermediate portion of a secondary air passage coupled to an exhaust passage of an internal combustion engine has been known by Patent Document 1.

Patent Document 2 discloses an air cleaning device for an engine that includes an air cleaner case, which is divided into a dirty side and a clean side by a filter element. A sub chamber is formed by partially partitioning a space of the clean side of the air cleaner case, and an outlet of a blowby hose for circulating blowby gas from a crank case of an engine and an inlet of a secondary air supplying pipe for supplying secondary air to an exhaust system of the engine are connected to the sub chamber.

Patent Document 3 discloses a blow-by gas ventilator for an internal combustion engine, which is constituted such that a fresh air lead-in pipe for leading clean air from an air cleaner is connected to an engine body to supply clean air into the engine body in order to ventilate blowby gas generated in the crankcase of the engine body. In this case, a blowby gas lead-out line leading blowby gas flowing with clean air supplied into the engine body is connected to an exhaust port of the engine body.

Patent Document 4 discloses an exhaust system with an air cleaner, which is formed such that gas passing through is partitioned into flows independent of each other in a flow path direction.

Patent document 5 discloses another air cleaner with a secondary air inlet.

### [PATENT DOCUMENT]

Patent Document 1: JP 2008-019710 A
Patent Document 2: JP 2001-090623 A
Patent Document 3: JP 2007-146 773 A
Patent Document 4: US 2013/255237 A1
Patent document 5: JPS 60175724 A

### [SUMMARY OF THE INVENTION]

### [PROBLEM TO BE SOLVED BY THE INVENTION]

The secondary air valve disclosed in Patent Document 1 has a special structure to achieve a reduction in operating noise occurred during an actuation of the secondary air valve, resulting in cost increase.

The present invention has been made in consideration of such circumstance and an object of the present invention is to provide an air cleaner for an internal combustion engine that ensures suppressing noise in association with the actuation of the secondary air valve from leaking to outside without using the secondary air valve with the special structure.

### [MEANS FOR SOLVING THE PROBLEM]

The object is to be accomplished by means of the independent claim. The dependent claims advantageously study the central idea of the present invention further. In order to achieve the object, according to a first feature of the present invention, there is provided an air cleaner for an internal combustion engine comprising a secondary air conduit that has a downstream end portion and an upstream end portion, a secondary air valve being interposed at an intermediate portion of the secondary air conduit, the downstream end portion being coupled to an exhaust system, the upstream end portion being coupled to a cleaner case so as to be communicated with an inside of a purified chamber, wherein the purified chamber, a region including a coupling portion of the purified chamber which is coupled with the secondary air conduit is partitioned as a secondary air separate chamber occupying a part of the purified chamber.

According to the invention, in addition, a connecting tube that guides air to an engine body side is coupled to the cleaner case, and the connecting tube has an upstream end opening in the purified chamber, the upstream end opening being arranged between a cleaner element and the secondary air separate chamber, the cleaner element being interposed between the purified chamber and an unpurified chamber.

According to a second feature, in addition to the first feature, the secondary air separate chamber has a wall surface a part of which is formed of the cleaner case.

According to the invention, in the purified chamber, a blow-by gas separate chamber into which blow-by gas is introduced is formed adjacent to the secondary air separate chamber.

According to the invention, in addition, a partition wall constitutes the secondary air separate chamber and the blow-by gas separate chamber in cooperation with the cleaner case.
According to a third feature, in addition to the first feature or the second feature, the partition wall is bonded to a protruding portion protruded from an inner surface of the cleaner case.

According to the invention, the partition wall has a shared wall portion shared by the secondary air separate chamber and the blow-by gas separate chamber, and the shared wall portion is arranged at a position separating the secondary air separate chamber and the blow-by gas separate chamber from each other.

According to another embodiment the cleaner case comprises a case body, which is formed into a shape open to one side and integrally includes a bottomed tubular portion with a closed end portion on the opposite side thereof, and wherein the secondary air separate chamber and the blow-by gas separate chamber are formed by cooperation of the partition wall and the tubular portion of the cleaner case.

According to another embodiment the partition wall is a member different from the case body.

According to another embodiment the connecting tube is coupled to a front wall of the tubular portion in the case body of the cleaner case.

### [EFFECTS OF THE INVENTION]

According to the first feature of the present invention, the secondary air conduit is communicated with the secondary air separate chamber partitioned in the purified chamber so as to occupy a part of the inside of the purified chamber. Therefore, echoes of an operating noise of the secondary air valve in the air cleaner can be suppressed. This ensures suppressing noise in association with an actuation of the secondary air valve from leaking to the outside without the use of a secondary air valve with a special structure.

According to the present invention, the upstream end opening of the connecting tube in the purified chamber is present between the cleaner element and the secondary air separate chamber. Accordingly, the secondary air separate chamber does not block a flow of air purified through the cleaner element to the connecting tube, thereby ensuring smoothing the flow of the air to the connecting tube.

According to the second feature of the present invention, a part of a wall surface of the secondary air separate chamber is constituted of a part of the cleaner case. Accordingly, an increase in weight of the air cleaner caused by disposing the secondary air separate chamber can be suppressed.

According to the present invention, the blow-by gas separate chamber and the secondary air separate chamber are formed adjacent to one another in the purified chamber. Accordingly, between the blow-by gas separate chamber and the secondary air separate chamber, a part of the wall thereof can be used in common, thereby ensuring simplification and weight reduction of the structure.

According to the third feature of the present invention, the partition wall for constituting the secondary air separate chamber and the blow-by gas separate chamber is bonded to the protruding portion protruded from the inner surface of the cleaner case. This ensures contributing to improvement in rigidity of the cleaner case.

According to the present invention, the shared wall portion as a part of the partition wall separates the secondary air separate chamber and the blow-by gas separate chamber from each other. Accordingly, the use of the partition wall with the simple shape allows forming the secondary air separate chamber and the blow-by gas separate chamber in the cleaner case.

### [BRIEF DESCRIPTION OF THE DRAWINGS]

[FIG. 1] It is a left side view of a two-wheeled motor vehicle of a first embodiment.
[FIG. 2] It is a plan view of an internal combustion engine.
[FIG. 3] It is a drawing illustrating a passage configuration of an intake system and an exhaust system of the internal combustion engine.
[FIG. 4] It is a sectional view taken along a line 4-4 in FIG. 2.
[FIG. 5] It is a sectional view taken along a line 5-5 in FIG. 4.
[FIG. 6] It is a sectional view taken along a line 6-6 in FIG. 2.
[FIG. 7] It is a sectional view corresponding to FIG. 4 of a second embodiment.
[FIG. 8] It is a sectional view taken along a line 8-8 in FIG. 7.
[FIG. 9] It is a sectional view taken along a line 9-9 in FIG. 8.

### [MODES FOR CARRYING OUT THE INVENTION]

The following describes embodiments of the present invention referring to the accompanying drawings. The following description defines the up, down, right, left, front, and rear, as directions viewed from an occupant riding on a two-wheeled motor vehicle.

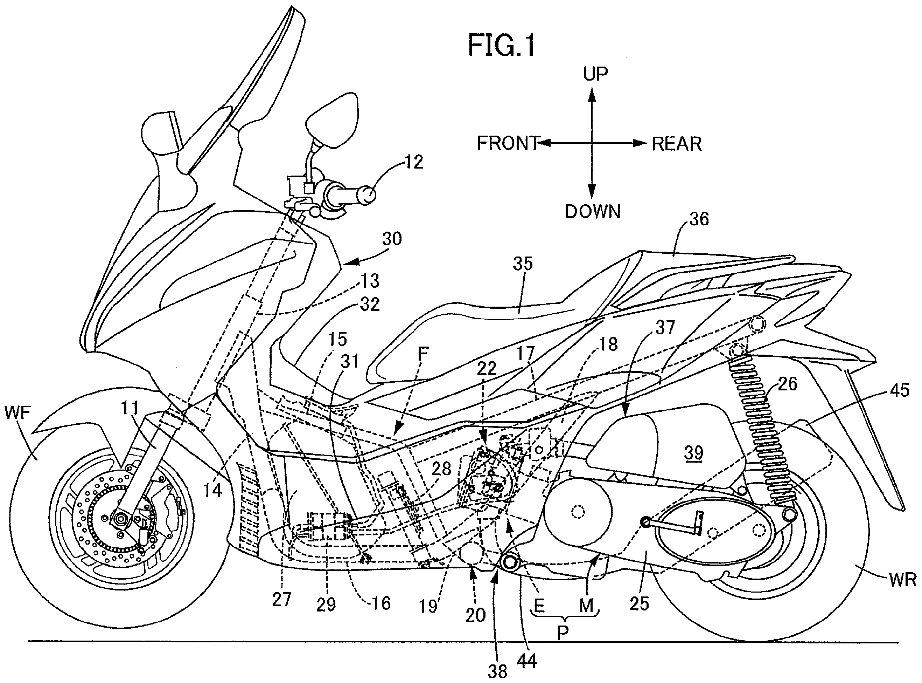

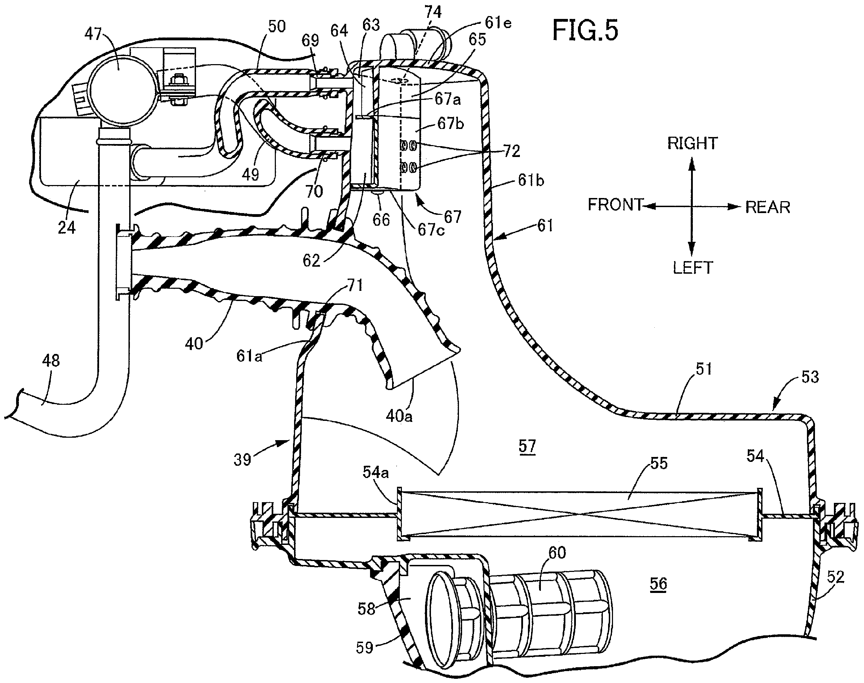

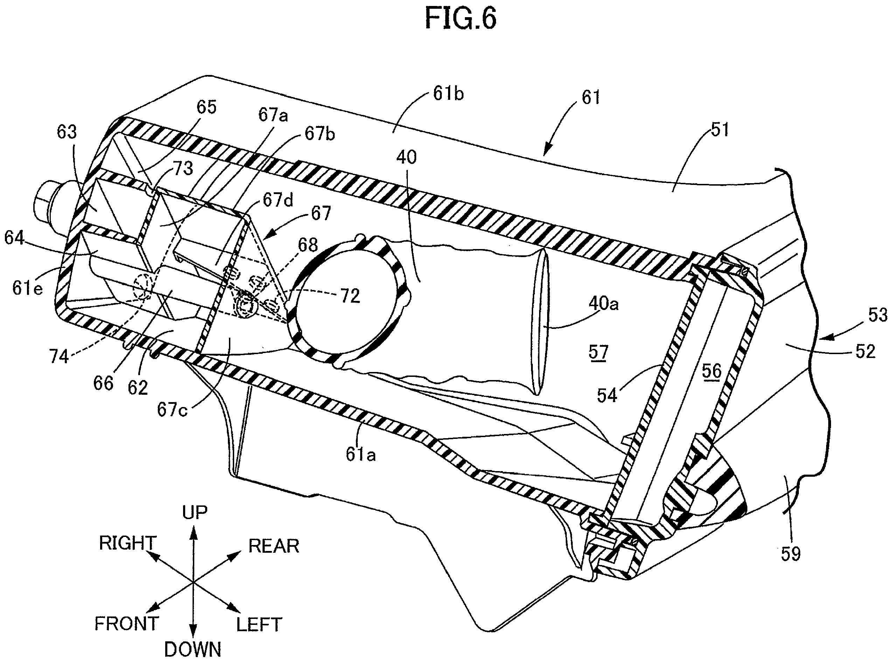

The following describes a first embodiment of the present invention with reference to FIG. 1 to FIG. 6. First, in FIG. 1, a body frame F of a scooter type two-wheeled motor vehicle includes a head pipe 13, a down frame 14, a pair of left and right main frames 15, a pair of left and right lower frames 16, a pair of left and right seat frames 17, and a pair of left and right rear frames 18. The head pipe 13 steerably supports a front fork 11, which journals a front wheel WF, and a steering handlebar 12 coupled to the front fork 11. The down frame 14 extends downward from this head pipe 13. The pair of left and right main frames 15 branch from the upper portion of this down frame 14 to the left and right and extend downward to the rear. The pair of left and right lower frames 16 are connected to the lower portion of the down frame 14 and extend rearward, and the rear end portions of the lower frames 16 are connected to the lower end portions of the main frames 15. The pair of left and right seat frames 17 are connected to the intermediate portions of the main frames 15 and extend upward to the rear. The pair of left and right rear frames 18 couple the rear end portions of the lower frames 16 to the seat frames 17 and extend upward to the rear. The lower frames 16 and the rear frames 18 are integrally formed.

A bracket 19 is disposed at the front end portion of the rear frame 18 in the body frame F. A power unit P providing power to drive a rear wheel WR is supported to be swingable in the up-down direction via a link mechanism 20. The power unit P is constituted of a water-cooled internal combustion engine E, which is arranged in front of the rear wheel WR, and a power transmission device M, which transmits an output from this internal combustion engine E to the rear wheel WR. The power transmission device M is housed in a transmission case 25 connected to an engine body 22 of the internal combustion engine E and extending on the left side of the rear wheel WR. A rear cushion unit 26 is disposed between the rear portion of this transmission case 25 and the rear portion of the body frame F.

A fuel tank 27 is arranged in front of the power unit P so as to be supported by the down frame 14 and the lower frames 16 of the body frame F. A radiator 28 is arranged between the fuel tank 27 and the power unit P as seen in the side view of the vehicle. A canister 29 is arranged on the left side of the fuel tank 27.

A part of the power unit P and the body frame F are covered with a vehicle body cover 30, which includes a pair of left and right footrests 31 on which feet of the occupant are stepped and a floor tunnel portion 32 bulging upward between these footrests 31. This vehicle body cover 30 is mounted to the body frame F. An occupant seat 35 and a passenger seat 36, which is arranged at the rear of the occupant seat 35, are disposed at the rear of the floor tunnel portion 32 and on the vehicle body cover 30.

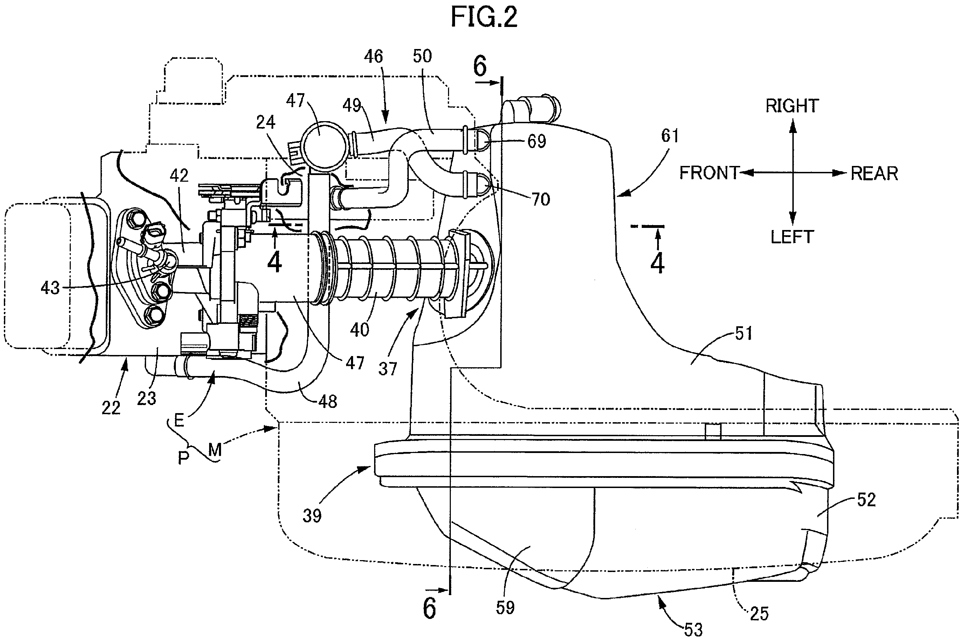

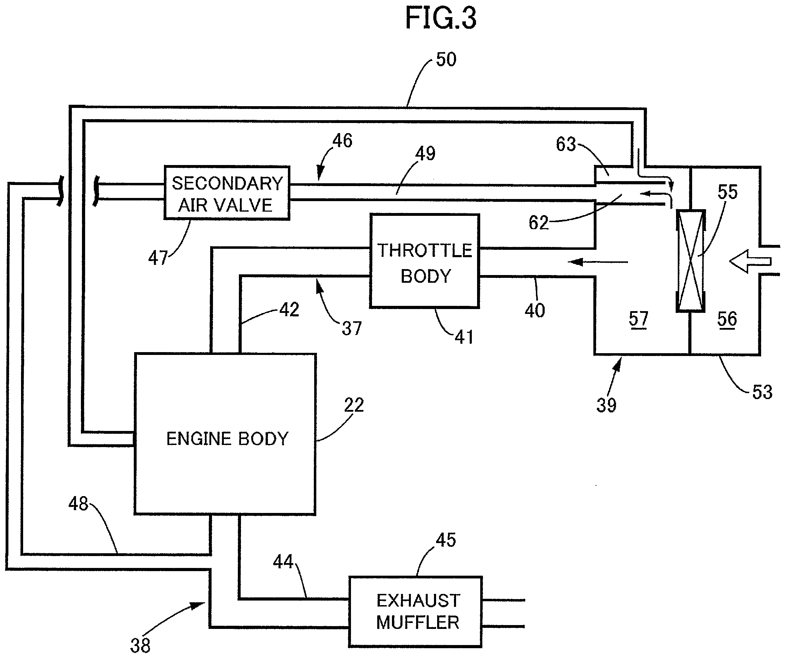

With reference to FIG. 2 and FIG. 3 as well, the engine body 22 in the internal combustion engine E has a posture inclined forward until the posture becomes substantially horizontal. An intake system 37 is coupled to an upper sidewall of a cylinder head 23 constituting a part of this engine body 22, and an exhaust system 38 is coupled to the lower sidewall of the cylinder head 23.

The intake system 37 includes an air cleaner 39, a connecting tube 40, a throttle body 41, and an insulator 42. The air cleaner 39 is supported to the transmission case 25 of the power unit P and is arranged on the upper side of this transmission case 25. The upstream end portion of the connecting tube 40 is coupled to the air cleaner 39. The downstream end portion of this connecting tube 40 is coupled to the throttle body 41. The insulator 42 couples this throttle body 41 and the cylinder head 23. A fuel injection valve 43 is mounted to the cylinder head 23. The exhaust system 38 includes an exhaust pipe 44 and an exhaust muffler 45. The upstream end portion of the exhaust pipe 44 is coupled to the lower sidewall of the cylinder head 23, and the exhaust pipe 44 is extended rearward through the lower side of the engine body 22. The exhaust muffler 45 is arranged on the right side of the rear wheel WR and is coupled to the downstream end portion of the exhaust pipe 44.

Especially focusing on FIG. 3, the downstream end portion of a secondary air conduit 46 is coupled to the exhaust pipe 44 on the upstream side with respect to the exhaust muffler 45 in the exhaust system 38, and the upstream end portion of this secondary air conduit 46 is coupled to the air cleaner 39. Moreover, a secondary air valve 47 is interposed at the intermediate portion of the secondary air conduit 46. That is, the secondary air conduit 46 is constituted of a downstream conduit 48, which couples the exhaust pipe 44 and the secondary air valve 47, and an upstream conduit 49, which couples the air cleaner 39 and the secondary air valve 47. Both the downstream conduit 48 and the upstream conduit 49 are hoses. A blow-by gas conduit 50, which guides blow-by gas from a crankcase 24 of the engine body 22, is disposed between the crankcase 24 and the air cleaner 39. This blow-by gas conduit 50 is also a hose and is disposed to intersect in the up-down direction with the upstream conduit 49 of the secondary air conduit 46.

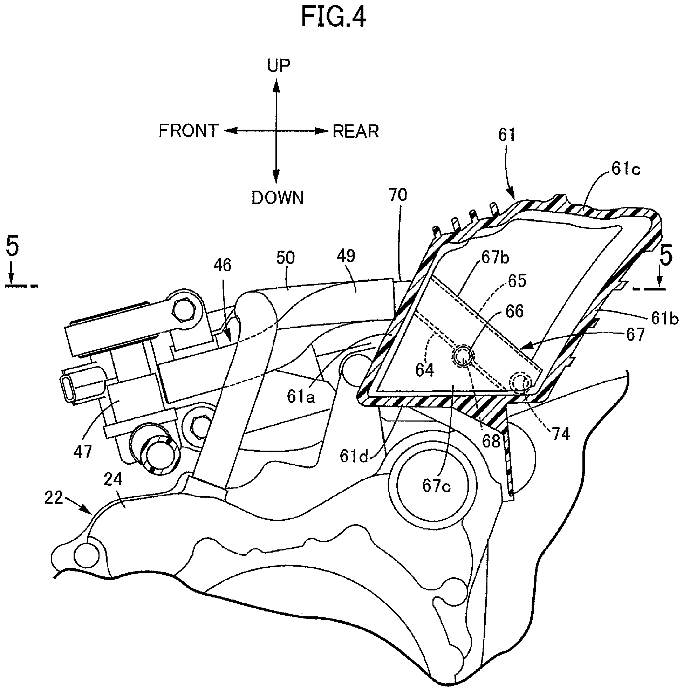

With reference to FIG. 4 to FIG. 6 as well, the air cleaner 39 includes a cleaner case 53, an element support plate 54, and a cleaner element 55. The cleaner case 53 is formed of a case body 51 made of synthetic resin and a case cover 52, which is dividingly combined with this case body 51 from the left side in the vehicle width direction. The element support plate 54 is clamped between the case body 51 and the case cover 52. The cleaner element 55 is disposed at the element support plate 54. An unpurified chamber 56 is formed between the element support plate 54, the cleaner element 55, and the case cover 52. A purified chamber 57 is formed between the element support plate 54, the cleaner element 55, and the case body 51.

The case body 51 is formed into a shape open to the left side in the vehicle width direction, arranged upward the transmission case 25, and is supported to the upper portion of the transmission case 25. The element support plate 54 integrally includes an element support portion 54a, which is formed into a rectangular tube shape so as to house and support the cleaner element 55. The outer peripheral edge portion of the element support plate 54 is clamped and secured between the case body 51 and the case cover 52.

To the front portion of the case cover 52, a cover member 59 made of synthetic resin to form an air introduction chamber 58 open to the outside is mounted. A suction duct 60, which communicates between the air introduction chamber 58 and the unpurified chamber 56 and airtightly passes through the front wall portion of the case cover 52, is supported to the front wall portion of the case cover 52.

The case body 51 integrally includes a bottomed tubular portion 61 with the closed right side end portion thereof in the vehicle width direction. The tubular portion 61 has a front wall 61a, which is inclined downward to the front, a rear wall 61b, which is arranged from the front wall 61a rearward in the vehicle front-rear direction and inclined downward to the front, a ceiling wall 61c, which couples the upper end portions of the front wall 61a and the rear wall 61b, a bottom wall 61d, which couples the lower end portions of the front wall 61a and the rear wall 61b, and an end wall 61e, which couples right end portions of the front wall 61a, the rear wall 61b, the ceiling wall 61c, and the bottom wall 61d in the vehicle width direction.

According to the present invention, in the purified chamber 57, a region including the coupling portion of the purified chamber 57 which is coupled with the upstream conduit 49 of the secondary air conduit 46 is partitioned as a secondary air separate chamber 62, which occupies a part of the purified chamber 57. In the purified chamber 57, a blow-by gas separate chamber 63 into which the blow-by gas is introduced is formed adjacent to the secondary air separate chamber 62.

On the inner surface of the end wall 61e of the tubular portion 61 in the case body 51 of the cleaner case 53, a first protruding wall 64, a second protruding wall 65, and a rod-shaped protruding portion 66 are integrally provided in a protruding manner. The first protruding wall 64 is inclined downward to the rear and connects between the intermediate portion in the up-down direction of the front wall 61a and the bottom wall 61d. The second protruding wall 65 is arranged parallel to the first protruding wall 64 rearward in the vehicle front-rear direction with respect to the first protruding wall 64 and connects between a part biased to the upper portion of the front wall 61a in the up-down direction and the bottom wall 61d. The rod-shaped protruding portion 66 is integrated with the first protruding wall 64 and protrudes on the right side in the vehicle width direction from the first protruding wall 64.

The secondary air separate chamber 62 and the blow-by gas separate chamber 63 are formed by cooperation of a partition wall 67, which is a member different from the case body 51, and the tubular portion 61 in the case body 51 of the cleaner case 53. The partition wall 67 integrally has a flat outside wall portion 67a, a rear side wall portion 67b, an inside wall portion 67c, and a reinforcing plate portion 67d. The outside wall portion 67a abuts against the tip end portions of the first protruding wall 64 and the second protruding wall 65 to form the blow-by gas separate chamber 63 between the first protruding wall 64 and the second protruding wall 65. The rear side wall portion 67b is connected at a right angle to the rear end of the outside wall portion 67a in the vehicle front-rear direction and extends to the left side in the vehicle width direction. The inside wall portion 67c is connected at a right angle to the left end portion of the rear side wall portion 67b in the vehicle width direction, extends forward in the vehicle front-rear direction, and abuts against the front wall 61a of the case body 51. The reinforcing plate portion 67d is arranged upright on the inner surface of the rear side wall portion 67b, extending between the rear portions of the outside wall portion 67a and the inside wall portion 67c. Moreover, the upper end portion of the partition wall 67 abuts against the front wall 61a of the tubular portion 61, and the lower end portion of the partition wall 67 abuts against the lower portion of the rear wall 61b and the bottom wall 61d of the tubular portion 61.

That is, the secondary air separate chamber 62 is formed by the end wall 61e, the front wall 61a, the bottom wall 61d, and the rear wall 61b of the tubular portion 61, the first protruding wall 64, and the partition wall 67 in the case body 51. A part of the wall surface of the secondary air separate chamber 62 is formed of the tubular portion 61 in the case body 51 of the cleaner case 53. The blow-by gas separate chamber 63 is formed by the end wall 61e, the front wall 61a, the bottom wall 61d, and the rear wall 61b of the tubular portion 61, the first protruding wall 64, the second protruding wall 65, and the outside wall portion 67a of the partition wall 67 in the case body 51. The blow-by gas separate chamber 63 is arranged adjacent to the secondary air separate chamber 62. That is, the outside wall portion 67a as a part of the partition wall 67 functions as a shared wall portion shared by the secondary air separate chamber 62 and the blow-by gas separate chamber 63, and this outside wall portion 67a is arranged at a position separating the secondary air separate chamber 62 and the blow-by gas separate chamber 63 from each other.

A through hole 68 into which the tip end portion of the protruding portion 66 is inserted is formed in the inside wall portion 67c of the partition wall 67. The protruding portion 66 is bonded to the inside wall portion 67c of the partition wall 67 by thermal crimping.

At the front wall 61a of the tubular portion 61 in the case body 51, a blow-by gas coupling pipe 69 and a secondary air coupling pipe 70 are integrally provided in a protruding manner forward in the vehicle front-rear direction. The blow-by gas coupling pipe 69 opens between the first protruding wall 64 and the second protruding wall 65 so as to be communicated with the blow-by gas separate chamber 63. The secondary air coupling pipe 70 is arranged on the left side of the blow-by gas coupling pipe 69 in the vehicle width direction and is communicated with the secondary air separate chamber 62. The blow-by gas conduit 50 is coupled to the blow-by gas coupling pipe 69 and the upstream conduit 49 of the secondary air conduit 46 is coupled to the secondary air coupling pipe 70.

An opening 71 is formed at the central portion in the vehicle width direction of the front wall 61a of the tubular portion 61 in the case body 51 so as to be positioned on the left side in the vehicle width direction with respect to the secondary air coupling pipe 70. Moreover, the connecting tube 40, which guides the air to the cylinder head 23 side of the engine body 22, airtightly passes through the opening 71 and is coupled to the front wall 61a. An upstream end opening 40a of the connecting tube 40 in the purified chamber 57 orients the cleaner element 55 side, the cleaner element 55 being interposed between the unpurified chamber 56 and the purified chamber 57, and is arranged between this cleaner element 55 and the secondary air separate chamber 62.

A plurality of secondary air communication holes 72 are formed in the rear side wall portion 67b of the partition wall 67 to guide the air inside the purified chamber 57 to the secondary air separate chamber 62. A blow-by gas communication hole 73 is formed in the upper portion of the second protruding wall 65 to cause the upper portion inside the blow-by gas separate chamber 63 to be communicated with the inside of the purified chamber 57. Further, while a drain hole 74 communicating with the lower portion of the blow-by gas separate chamber 63 is disposed at the end wall 61e of the tubular portion 61, this drain hole 74 may be omitted.

Next, describing the operation of this first embodiment, in the purified chamber 57, which is formed in the cleaner case 53 of the air cleaner 39, the region including the coupling portion of the purified chamber 57 which is coupled with the secondary air conduit 46 is partitioned as the secondary air separate chamber 62 occupying a part of the purified chamber 57. Therefore, echoes of the operating noise of the secondary air valve 47 interposed at the intermediate portion of the secondary air conduit 46 can be suppressed in the air cleaner 39. This ensures suppressing the noise in association with the actuation of the secondary air valve 47 from leaking to the outside without the use of the secondary air valve 47 with the special structure.

The connecting tube 40 to guide the air to the cylinder head 23 side of the engine body 22 is coupled to the front wall 61a of the tubular portion 61 in the case body 51 of the cleaner case 53. The upstream end opening 40a of the connecting tube 40 in the purified chamber 57 is arranged between the cleaner element 55, which is interposed between the purified chamber 57 and the unpurified chamber 56, and the secondary air separate chamber 62. Accordingly, the secondary air separate chamber 62 does not block the flow of the air purified through the cleaner element 55 to the connecting tube 40, thereby ensuring smoothing the flow of the air to the connecting tube 40.

A part of the wall surface of the secondary air separate chamber 62 is formed of the tubular portion 61 in the case body 51 of the cleaner case 53. Accordingly, an increase in weight of the air cleaner 39 caused by disposing the secondary air separate chamber 62 can be suppressed.

Additionally, in the purified chamber 57, the blow-by gas separate chamber 63 into which the blow-by gas is introduced is formed adjacent to the secondary air separate chamber 62. Accordingly, between the blow-by gas separate chamber 63 and the secondary air separate chamber 62, a part of the wall thereof can be used in common, thereby ensuring simplification and weight reduction of the structure.

The partition wall 67, which constitutes the secondary air separate chamber 62 and the blow-by gas separate chamber 63 in cooperation with the tubular portion 61 in the case body 51 of the cleaner case 53, is bonded to the protruding portion 66 protruded from the inner surface of the end wall 61e at the tubular portion 61. This ensures contributing to improvement in rigidity of the case body 51 and eventually the cleaner case 53.

Further, the partition wall 67 has the outside wall portion 67a as the shared wall portion shared by the secondary air separate chamber 62 and the blow-by gas separate chamber 63. The outside wall portion 67a is arranged at the position separating the secondary air separate chamber 62 and the blow-by gas separate chamber 63 from each other. Accordingly, the use of the partition wall 67 with the simple shape allows forming the secondary air separate chamber 62 and the blow-by gas separate chamber 63 in the cleaner case 53.

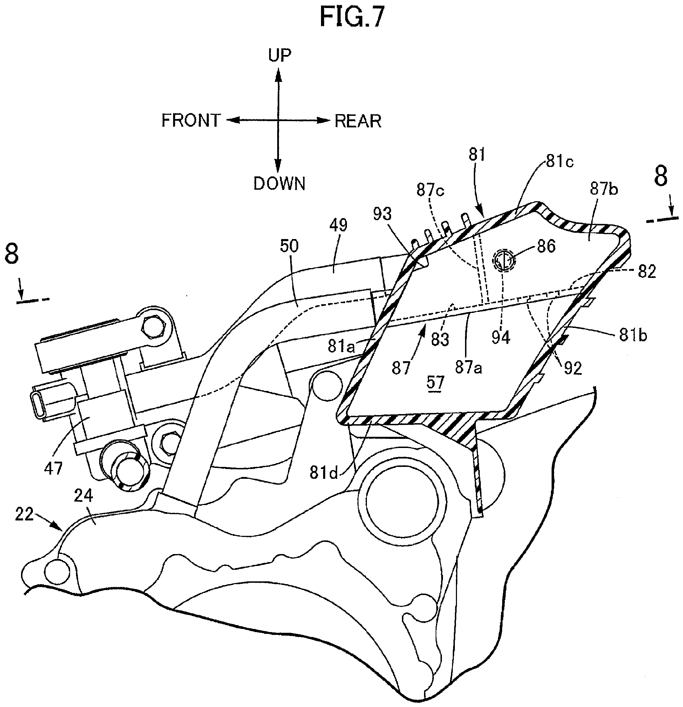

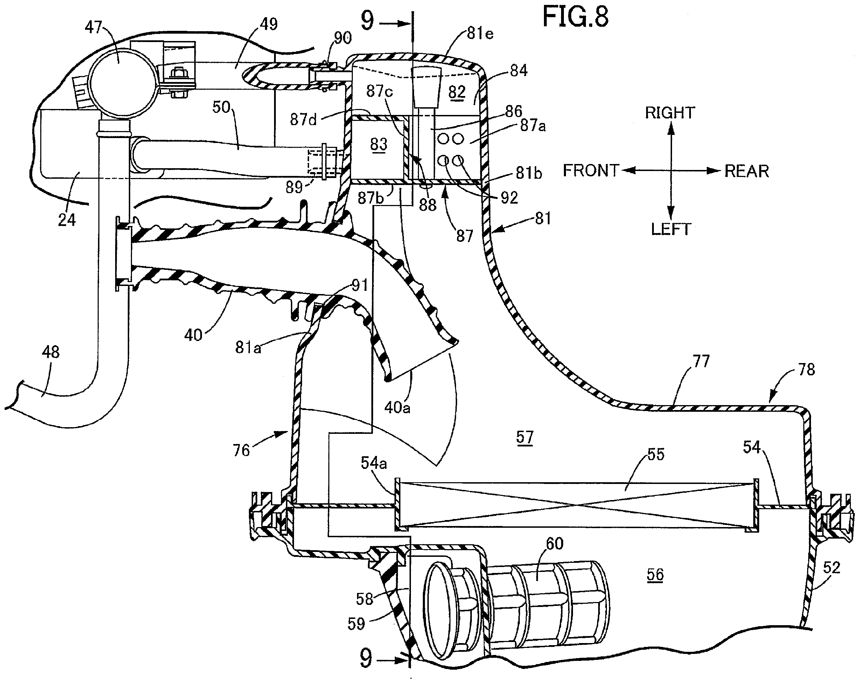

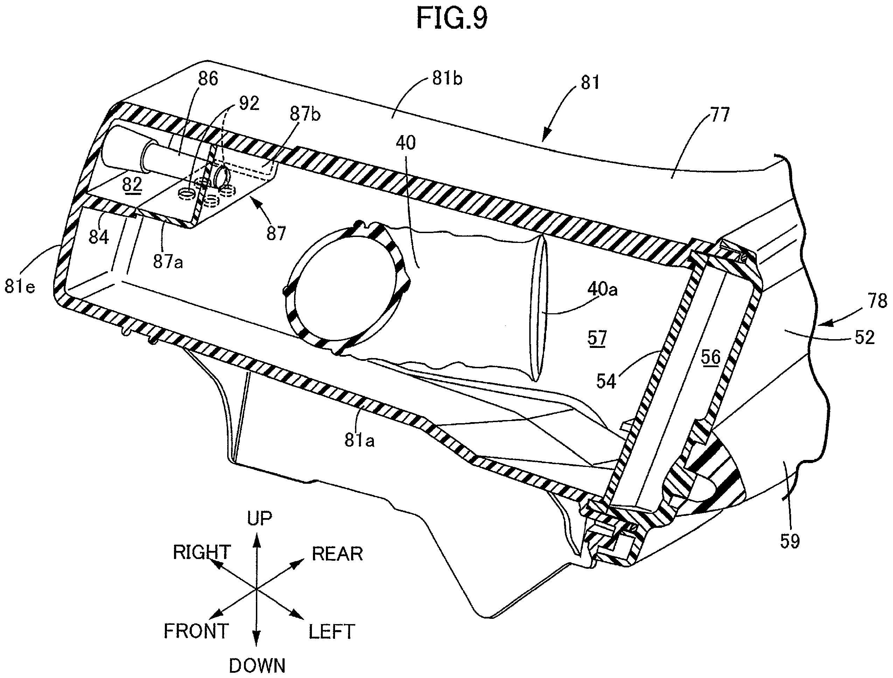

The following describes a second embodiment of the present invention with reference to FIG. 7 to FIG. 9. The parts corresponding to the first embodiment are merely illustrated by assigning the identical reference numerals and therefore are not elaborated here.

An air cleaner 76 includes a cleaner case 78, the element support plate 54, and the cleaner element 55. The cleaner case 78 is formed of a case body 77 made of synthetic resin and the case cover 52, which is dividingly combined with this case body 77 from the left side in the vehicle width direction. The element support plate 54 is clamped between the case body 77 and the case cover 52. The cleaner element 55 is disposed at the element support plate 54. The unpurified chamber 56 is formed between the element support plate 54, the cleaner element 55, and the case cover 52. The purified chamber 57 is formed between the element support plate 54, the cleaner element 55, and the case body 77. The outer peripheral edge portion of the element support plate 54 is clamped and secured between the case body 77 and the case cover 52.

The case body 77 integrally includes a bottomed tubular portion 81 with the closed right side end portion thereof in the vehicle width direction. The tubular portion 81 has: a front wall 81a, which is inclined downward to the front; a rear wall 81b, which is arranged from the front wall 81a rearward in the vehicle front-rear direction and inclined downward to the front; a ceiling wall 81c, which couples the upper end portions of the front wall 81a and the rear wall 81b; a bottom wall 81d, which couples the lower end portions of the front wall 81a and the rear wall 81b; and an end wall 81e, which couples right end portions of the front wall 81a, the rear wall 81b, the ceiling wall 81c, and the bottom wall 81d in the vehicle width direction.

In the purified chamber 57, a region including the coupling portion of the purified chamber 57 which is coupled with the upstream conduit 49 of the secondary air conduit 46 is partitioned as a secondary air separate chamber 82, which occupies a part of the purified chamber 57. In the purified chamber 57, a blow-by gas separate chamber 83 into which the blow-by gas is introduced is formed adjacent to the secondary air separate chamber 82.

A protruding wall 84 is integrally provided in a protruding manner on the inner surface of the end wall 81e of the tubular portion 81 in the case body 77 of the cleaner case 78. The protruding wall 84 is formed into a flat plate shape extending along the vehicle front-rear direction and the vehicle width direction and connects between the intermediate portion in the up-down direction of the front wall 81a and the intermediate portion in the up-down direction of the rear wall 81b. On an inner surface at the intermediate portion in the front-rear direction of the end wall 81e, a rod-shaped protruding portion 86 is integrally provided in a protruding manner. The rod-shaped protruding portion 86 is arranged above the protruding wall 84 and projects on the right side in the vehicle width direction

The secondary air separate chamber 82 and the blow-by gas separate chamber 83 are formed by cooperation of a partition wall 87 which is a member different from the case body 77, and the tubular portion 81 in the case body 77 of the cleaner case 78.

The partition wall 87 integrally has a flat plate-shaped lower wall portion 87a, a flat plate-shaped inside wall portion 87b, a flat plate-shaped intermediate wall portion 87c, and a flat plate-shaped outside wall portion 87d. The outer end of the lower wall portion 87a in the vehicle width direction is caused to abut against the tip end of the protruding wall 84, and the lower wall portion 87a extends along the vehicle front-rear direction and the vehicle width direction. The inside wall portion 87b is connected at a right angle to an end portion, on the side opposite to the protruding wall 84, of the lower wall portion 87a and extends along the up-down direction and the vehicle front-rear direction. The intermediate wall portion 87c is connected at a right angle to the intermediate portion of the lower wall portion 87a and the inside wall portion 87b in the vehicle front-rear direction and extends along the up-down direction and the vehicle width direction. The outside wall portion 87d is connected at a right angle to the end portion of the lower wall portion 87a, the end portion being on the side opposite to the inside wall portion 87b forward with respect to the intermediate wall portion 87c in the vehicle front-rear direction. The outside wall portion 87d is also connected at a right angle to the end portion, on the side opposite to the inside wall portion 87b, of the intermediate wall portion 87c and extends along the vehicle front-rear direction and the up-down direction.

Moreover, the front end edge and the rear end edge of the lower wall portion 87a are caused to abut against the front wall 81a and the rear wall 81b of the tubular portion 81. The front end edge, the rear end edge, and the upper end edge of the inside wall portion 87b are caused to abut against the front wall 81a, the rear wall 81b, and the ceiling wall 81c of the tubular portion 81, respectively. The upper end edge of the intermediate wall portion 87c is caused to abut against the ceiling wall 81c of the tubular portion 81. The front end edge and the upper end edge of the outside wall portion 87d are caused to abut against the front wall 81a and the ceiling wall 81c of the tubular portion 81.

The secondary air separate chamber 82 is formed of the end wall 81e, the front wall 81a, the rear wall 81b, and the ceiling wall 81c of the tubular portion 81, and the protruding wall 84, and the lower wall portion 87a, the inside wall portion 87b, the intermediate wall portion 87c, and the outside wall portion 87d of the partition wall 87, in the case body 77, so as to have a shape bent into a substantially L shape as seen in a plan view. A part of the wall surface of the secondary air separate chamber 82 is formed by the tubular portion 81 in the case body 77 of the cleaner case 78. The blow-by gas separate chamber 83 is formed of the front wall 81a of the tubular portion 81, and the lower wall portion 87a, the inside wall portion 87b, the intermediate wall portion 87c, and the outside wall portion 87d of the partition wall 87, in the case body 77. The blow-by gas separate chamber 83 is arranged adjacent to the secondary air separate chamber 82 so as to be covered with this secondary air separate chamber 82 from rearward in the vehicle front-rear direction and outward in the vehicle width direction.

The intermediate wall portion 87c and the outside wall portion 87d as a part of the partition wall 87 are configured as a shared wall portion 88 shared by the secondary air separate chamber 82 and the blow-by gas separate chamber 83. This shared wall portion 88 is arranged at the position separating the secondary air separate chamber 82 and the blow-by gas separate chamber 83 from each other.

A through hole 94 into which the tip end portion of the protruding portion 86 is inserted is formed on the inside wall portion 87b of the partition wall 87. The protruding portion 86 is bonded to the inside wall portion 87b of the partition wall 87 by thermal crimping.

To the front wall 81a of the tubular portion 81 in the case body 77, a blow-by gas coupling pipe 89 and a secondary air coupling pipe 90 are integrally provided in a protruding manner forward in the vehicle front-rear direction. The blow-by gas coupling pipe 89 is communicated with the lower portion inside the blow-by gas separate chamber 83. The secondary air coupling pipe 90 is arranged on the right side of the blow-by gas coupling pipe 89 in the vehicle width direction and communicated with the upper portion of the secondary air separate chamber 82. To the blow-by gas coupling pipe 89, the blow-by gas conduit 50 substantially linearly extending in the vehicle front-rear direction as seen in a plan view is coupled. To the secondary air coupling pipe 90, the upstream conduit 49 of the secondary air conduit 46 substantially linearly extending in the vehicle front-rear direction as seen in a plan view is coupled.

The opening 71 is formed at the central portion in the vehicle width direction of the front wall 81a of the tubular portion 81 in the case body 77 so as to be positioned on the left side with respect to the blow-by gas coupling pipe 89 in the vehicle width direction. Moreover, the connecting tube 40 airtightly passes through the opening 71 and is coupled to the front wall 81a. The upstream end opening 40a of the connecting tube 40 in the purified chamber 57 orients the cleaner element 55 side, the cleaner element 55 being interposed between the unpurified chamber 56 and the purified chamber 57, and is arranged between this cleaner element 55 and the secondary air separate chamber 82.

A plurality of secondary air communication holes 92 are formed on the lower wall portion 87a of the partition wall 87 so as to guide the air inside the purified chamber 57 to the secondary air separate chamber 82. A cutout 93 is formed on the front end upper portion of the inside wall portion 87b in the partition wall 87 so as to cause the upper portion inside the blow-by gas separate chamber 83 to be communicated with the inside of the purified chamber 57.

While there is a possibility that condensed oil from the blow-by gas is generated in the blow-by gas separate chamber 83, since the blow-by gas coupling pipe 89 to which the blow-by gas conduit 50 is coupled is communicated with the lower portion of the blow-by gas separate chamber 83, the oil is returned to the crankcase 24 side via the blow-by gas conduit 50.

This second embodiment can also provide the effects similar to the first embodiment.

### [DESCRIPTION OF REFERENCE NUMERALS AND SYMBOLS]

22 ...... engine body
38 ... exhaust system
39, 76 ... air cleaner
40 ... connecting tube
40a ... upstream end opening of connecting tube 40
46 ... secondary air conduit
47 ... secondary air valve
53, 78 ... cleaner case
55 ... cleaner element
56 ... unpurified chamber
57 ... purified chamber
62, 82 ... secondary air separate chamber
63, 83 ... blow-by gas separate chamber
66, 86 ... protruding portion
67, 87 ... partition wall
67a... outside wall portion as shared wall portion
88 ... shared wall portion
E ... internal combustion engine

## Claims

1. An air cleaner for an internal combustion engine (E) comprising
a cleaner element (55), which is interposed between a purified chamber (57) and an unpurified chamber (56), and
a secondary air conduit (46) that has a downstream end portion and an upstream end portion, a secondary air valve (47) being interposed at an intermediate portion of the secondary air conduit (46), the downstream end portion being coupled to an exhaust system (38), the upstream end portion being coupled to a cleaner case (53, 78) so as to be communicated with an inside of the purified chamber (57),
wherein, in the purified chamber (57), a region including a coupling portion of the purified chamber (57), which is coupled with the secondary air conduit (46), is partitioned as a secondary air separate chamber (62, 82) occupying a part of the purified chamber (57), wherein a connecting tube (40) that guides air to an engine body (22) side is coupled to the cleaner case (53, 78) and has an upstream end opening (40a) in the purified chamber (57),
wherein
the upstream end opening (40a) is arranged between the cleaner element (55) and the secondary air separate chamber (62, 82); and
in the purified chamber (57), a blow-by gas separate chamber (63, 83), into which blow-by gas is introduced, is formed adjacent to the secondary air separate chamber (62, 82),
wherein a partition wall (67, 87) constitutes the secondary air separate chamber (62, 82) and the blow-by gas separate chamber (63, 83) in cooperation with the cleaner case (53, 78), and the partition wall (67, 87) has a shared wall portion (67a, 88) shared by the secondary air separate chamber (62, 82) and the blow-by gas separate chamber (63, 83),
wherein the shared wall portion (67a, 88) is arranged at a position separating the secondary air separate chamber (62, 82) and the blow-by gas separate chamber (63, 83) from each other.

2. The air cleaner for an internal combustion engine (E) according to claim 1, wherein the secondary air separate chamber (62, 82) has a wall surface a part of which is formed of the cleaner case (53, 78).

3. The air cleaner for an internal combustion engine (E) according to claim 1 or claim 2, wherein the partition wall (67, 87) is bonded to a protruding portion (66, 86) protruded from an inner surface of the cleaner case (53, 78).

4. The air cleaner for an internal combustion engine (E) according to any one of claims 1 to 3, wherein the cleaner case (53, 78) comprises a case body (51, 77), which is formed into a shape open to one side and integrally includes a bottomed tubular portion (61, 81) with a closed end portion on the opposite side thereof, and
wherein the secondary air separate chamber (62, 82) and the blow-by gas separate chamber (63, 83) are formed by cooperation of the partition wall (67, 87), wherein the partition wall (67, 87) is a member different from the case body (51, 77), and the tubular portion (61, 81) of the cleaner case (53, 78).

5. The air cleaner for an internal combustion engine (E) according to claim 4, wherein the connecting tube (40) is coupled to a front wall (61a, 81a) of the tubular portion (61, 81) in the case body (51, 77) of the cleaner case (53, 78).

## Patentansprüche

1. Luftfilter für einen Verbrennungsmotor (E), der aufweist
ein Filterelement (55), das zwischen einer gereinigten Kammer (57) und einer ungereinigten Kammer (56) angeordnet ist, und
ein sekundäres Luftrohr (46), das einen nachgelagerten Endbereich und einen vorgelagerten Endbereich hat, wobei ein sekundäres Luftventil (47) an einem Zwischenbereich des sekundären Luftrohrs (46) angeordnet ist, wobei der nachgelagerte Endbereich mit einem Auslasssystem (38) verbunden ist, der vorgelagerte Endbereich mit einem Luftfiltergehäuse (53, 78) verbunden ist, um so mit einer Innenseite der gereinigten Kammer (57) in Austausch zu stehen,
wobei in der gereinigten Kammer (57) ein Gebiet, das einen Verbindungsbereich der gereinigten Kammer (57) aufweist, der mit dem sekundären Luftrohr (46) verbunden ist, als eine getrennte sekundäre Luftkammer (62, 82) abgeteilt ist, die einen Teil der gereinigten Kammer (57) einnimmt,
wobei ein Verbindungsrohr (40), das Luft zu einer Seite des Motorblocks (22) führt, mit dem Luftfiltergehäuse (53, 78) verbunden ist und eine vorgelagerte Endöffnung (40a) in der gereinigten Kammer (57) hat,
wobei die vorgelagerte Endöffnung (40a) zwischen dem Luftfilterelement (55) und der getrennten sekundären Luftkammer (62, 82) angeordnet ist; und
in der gereinigten Kammer (57) eine getrennte Durchflussgaskammer (63, 83), in die Durchflussgas eingeleitet wird, benachbart zur getrennten sekundären Luftkammer (62, 82) ausgebildet ist,
wobei eine Trennwand (67, 87) die getrennte sekundäre Luftkammer (62, 82) und die getrennte Durchflussgaskammer (63, 83) in Zusammenwirken mit dem Luftfiltergehäuse (53, 78) bildet, und die Trennwand (67, 87) einen gemeinsamen Wandbereich (67a, 88) hat, der von der getrennten sekundären Luftkammer (62, 82) und der getrennten Durchflussgaskammer (63, 83) gemeinsam genutzt wird,
wobei der gemeinsame Wandbereich (67a, 88) an einer Position angeordnet ist, die die getrennte sekundäre Luftkammer (62, 82) und die getrennte Durchflussgaskammer (63, 83) voneinander trennt.

2. Luftfilter für einen Verbrennungsmotor (E) nach Anspruch 1, wobei die getrennte sekundäre Luftkammer (62, 82) eine Wandfläche hat, von der ein Teil als Luftfiltergehäuse (53, 78) ausgebildet ist.

3. Luftfilter für einen Verbrennungsmotor (E) nach Anspruch 1 oder Anspruch 2, wobei die Trennwand (67, 87) an einem hervorstehenden Bereich (66, 86) gebondet ist, der von einer Innenfläche des Luftfiltergehäuses (53, 78) hervorsteht.

4. Luftfilter für einen Verbrennungsmotor (E) nach einem der Ansprüche 1 bis 3, wobei das Luftfiltergehäuse (53, 78) einen Gehäusekörper (51, 77) aufweist, der in einer Form ausgebildet ist, die zu einer Seite geöffnet ist und integral einen unteren röhrenförmigen Bereich (61, 81) mit einem geschlossenen Endbereich an der gegenüberliegenden Seite davon aufweist, und
wobei die getrennte sekundäre Luftkammer (62, 82) und die getrennte Durchflussgaskammer (63, 83) durch Zusammenwirken der Trennwand (67, 87) ausgebildet sind, wobei die Trennwand (67, 87) ein Element ist, das sich vom Gehäusekörper (51, 77) und dem röhrenförmigen Bereich (61, 81) des Filtergehäuses (53, 78) unterscheidet.

5. Luftfilter für einen Verbrennungsmotor (E) nach Anspruch 4, wobei das Verbindungsrohr (40) mit einer vorderen Wand (61a, 81a) des röhrenförmigen Bereichs (61, 81) im Gehäusekörper (51, 77) des Luftfiltergehäuses (53, 78) verbunden ist.

## Revendications

1. Filtre à air pour un moteur à combustion interne (E) comprenant
un élément de filtre (55), qui est interposé entre une chambre purifiée (57) et une chambre non purifiée (56), et
un conduit d'air secondaire (46) qui a une portion d'extrémité aval et une portion d'extrémité amont, une soupape à air secondaire (47) étant interposée au niveau d'une portion intermédiaire du conduit d'air secondaire (46), la portion d'extrémité aval étant couplée à un système d'échappement (38), la portion d'extrémité amont étant couplée à un carter de filtre (53, 78) de manière à être en communication avec un intérieur de la chambre purifiée (57),
dans lequel, dans la chambre purifiée (57), une région comportant une portion de couplage de la chambre purifiée (57), qui est couplée au conduit d'air secondaire (46), est cloisonnée comme une chambre séparée d'air secondaire (62, 82) occupant une partie de la chambre purifiée (57), dans lequel un tube de connexion (40) qui guide l'air vers un côté de corps de moteur (22) est couplé au carter de filtre (53, 78) et a une ouverture d'extrémité amont (40a) dans la chambre purifiée (57),
dans lequel l'ouverture d'extrémité amont (40a) est agencée entre l'élément de filtre (55) et la chambre séparée d'air secondaire (62, 82) ; et
dans la chambre purifiée (57), une chambre séparée de gaz de soufflage (63, 83) dans laquelle un gaz de soufflage est introduit, est formée de manière adjacente à la chambre séparée d'air secondaire (62, 82),
dans lequel une paroi de cloisonnement (67, 87) constitue la chambre séparée d'air secondaire (62, 82) et la chambre séparée de gaz de soufflage (63, 83) en coopération avec le carter de filtre (53, 78), et la paroi de cloisonnement (67, 87) a une portion de paroi partagée (67a, 88), partagée par la chambre séparée d'air secondaire (62, 82) et la chambre séparée de gaz de soufflage (63, 83),
dans lequel la portion de paroi partagée (67a, 88) est agencée à une position séparant la chambre séparée d'air secondaire (62, 82) et la chambre séparée de gaz de soufflage (63, 83) l'une de l'autre.

2. Filtre à air pour un moteur à combustion interne (E) selon la revendication 1, dans lequel la chambre séparée d'air secondaire (62, 82) a une surface de paroi dont une partie est formée du carter de filtre (53, 78).

3. Filtre à air pour un moteur à combustion interne (E) selon la revendication 1 ou la revendication 2, dans lequel la paroi de cloisonnement (67, 87) est liée à une portion en saillie (66, 86) faisant saillie depuis une surface intérieure du carter de filtre (53, 78).

4. Filtre à air pour un moteur à combustion interne (E) selon l'une quelconque des revendications 1 à 3, dans lequel le carter de filtre (53, 78) comprend un corps de carter (51, 77), qui est formé en une forme ouverte sur un côté et comporte, d'un seul tenant, une portion tubulaire (61, 81) à fond avec une portion d'extrémité fermée sur le côté opposé de celle-ci, et
dans lequel la chambre séparée d'air secondaire (62, 82) et la chambre séparée de gaz de soufflage (63, 83) sont formées par la coopération de la paroi de cloisonnement (67, 87), dans lequel la paroi de cloisonnement (67, 87) est un organe différent du corps de carter (51, 77) et de la portion tubulaire (61, 81) du carter de filtre (53, 78).

5. Filtre à air pour un moteur à combustion interne (E) selon la revendication 4, dans lequel le tube de connexion (40) est couplé à une paroi avant (61a, 81a) de la portion tubulaire (61, 81) dans le corps de carter (51, 77) du carter de filtre (53, 78).
